# EUROPÄISCHE PATENTANMELDUNG

(11) **EP 1 277 410 A2**
(43) Veröffentlichungstag der Anmeldung: **22.01.2003**
(21) Anmeldenummer: 02405586.5
(22) Anmeldetag: 11.07.2002
(51) Int. Cl.: A23G 3/28

(54) **Düse zum Dekorieren von Konditoreierzeugnisse**

(30) Priorität: 18.07.2001 CH 13302001
(71) Anmelder: Cipriani, Renée, 6915 Noranco (CH)
(72) Erfinder: Cipriani, Renée, 6915 Noranco (CH)
(74) Vertreter: Gaggini, Carlo, Dipl.Ing.

(57) **Zusammenfassung**

Die vorliegenden Erfindung betrifft eine Düse(2) zur Dekoration von Konditoreierzeugnissen, bestehend aus einem konischen Körper (3), der auf der einen Seite eine profilierte Öffnung (4) aufweist, und der auf der breiteren anderen Seite, die ebenfalls offen ist, ein Innengewinde aufweist, das passend ausgelegt ist, so dass es auf das Aussengewinde einer normalen Tube (1) für den Verkauf pastöser Massen wie Senf Mayonnaise, Sauce Tatare, Tomatenpaste, Pasten, usw., aufgeschraubt werden kann. Dank der Erfindung lassen sich die normalen Tuben für solche Nahrungsmittel in Vorrichtungen zur Dekoration von Torten, Feingebäck, Süsswaren oder Salatteller jeder Art, umwandeln, was dem Benutzer die Arbeit erleichtert, da er nicht mehr herkömmlichen Spritzsäcke oder Spritzpressen auffüllen und nachher sauber auswaschen muss, und wobei die Vorteile der langen Haltbarkeit gewonnen werden, die sich durch die Verwendung handelsüblicher Tuben für den Grossteil solcher Produkte ergeben.

## Beschreibung

Die vorliegende Erfindung betrifft eine Düse zum Dekorieren von Konditoreierzeugnissen bzw. Backwerk, wie sie im kennzeichnenden Teil des Patentanspruchs 1 definiert ist.

Dekorationsdüsen solcher Art verwenden alle Konditoren, um ihre Erzeugnisse zu dekorieren, wie Torten, Kuchen, Feingebäck, Konfekt, usw., mit pastösen Massen, wie vorwiegend auf Butterbasis hergestellte Cremen, Saucen, Pasten, usw. Zu diesem Zweck verwendet man üblicherweise einen Behälter in Form eines konischen Sackes (Spritzsack), auf dessen engerer Öffnung eine Düse zur Dekoration mittels Extrusion befestigt wird. Der Spritzsack wird mit der gewählten pastösen Masse gefüllt, die sodann durch die Düse gedrückt wird, indem der Sack mit einer Hand erfasst und zusammengepresst wird. Zu Lösen ist dabei das Problem der zuverlässigen Verbindung der Öffnung des Sackes mit der Düse, und zur Lösung dieses Problems sind schon viele Vorschläge gemacht worden, die normalerweise die Verwendung eines Verbindungselementes vorsehen, das als Ring mit einem Gewinde ausgebildet ist. Beispiele für solche Lösungen finden sich in der US-A-4'961'517, US-A-3'847'523, US-A-6'153'238, US-A-5'026'194.

Gemäss einem anderen Vorschlag ist der Behälter, der das Produkt zur Verzierung von Torten enthält, ein unter Druck stehender Behälter mit einem Verteiler-Ventil, wobei auf dem Behälter eine oder mehrere Düsen montiert werden. Ein Beispiel dieser Art von Lösung ist in der GB-A-1068061 gezeigt.

Alle diese Lösungen weisen den Nachteil auf, dass sie die Verwendung eines speziellen Behälters erfordern: Im ersten Fall jenen in Form eines Sackes, der mit der pastösen Masse zu füllen ist, und im zweiten Fall jenen in Form eines Druckbehälters der zuvor mit dem Produkt zu füllen ist und demnach, in seiner Verwendungsart den gewöhnlichen Spraydosen ähnlich ist. In beiden Fällen handelt es sich um gravierende Einschränkungen der Verwendbarkeit der Dekorationsdüsen, da im Fall der Verwendung des Spritzsackes nicht nur die Düse am Sack befestigt werden muss, sondern auch der Sack mit dem zu verwendenden Produkt zu füllen ist, während im zweiten Fall die Verwendung eines Druckgefässes die Anwendung problematisch macht und an die Verwendung eng festgelegter Produkte gebunden ist, die in Spraydosen in den Handel kommen.

Im technischen Bereich ist darüber hinaus die Anwendung von Tuben bekannt, die ein Produkt zum Abdichten enthalten, wie Silikonpasten oder Zweikomponentenprodukte und Ähnliches, auf denen eine Düse aufgeschraubt wird. Die Spitze der Düse wird danach auf einer bestimmten Höhe abgeschnitten, so dass ein mehr oder weniger grosser Durchgangsquerschnitt für das Material entsteht. Beispiele solcher technischer Anwendungen, die mit der Dekoration von Konditoreierzeugnisses nichts zu tun haben, und die überdies unprofilierte Düsenformen verwenden, sind in den US-A-4'957'225 und US-A-5'248'071 dargestellt.

Es ist auch bekannt, dass Tuben, die Nahrungsmittel enthalten, wie beispielsweise Mayonnaise, mit strukturierten bzw. profilierten Ausgangsöffnungen, beispielsweise sternförmig ausgebildet, versehen werden können, so dass das ausgepresste Produkt mit einem bestimmten Profil austritt. Diese Lösung erlaubt jedoch kein freies Anpassen des Produktprofils, weshalb deren Anwendbarkeit erheblich eingeschränkt ist.

Der Zweck der vorliegenden Erfindung ist daher, die genannten Nachteile der bekannten Düsen zur Verzierung von Konditoreierzeugnissen bzw. der bekannten Systeme zur Dekoration von Torten, usw., zu beheben, und die Notwendigkeit zu beseitigen, den Spritzsack oder den Kolben der Extrudier-Presse mit der pastösen Masse füllen zu müssen, wobei diese jeweils aus einem anderen Behälter umgefüllt werden muss, in welchem sie vorbereitet oder angeliefert wurde. Ferner soll dem professionellen Konditor, aber auch Hausfrauen, die gerne Süssigkeiten oder andere Speisen (verzierte Salatteller, mit Sülze überzogene Pasteten, usw.) dekorieren, eine äusserst einfache Lösung zur Verfügung gestellt wird zum raschen Verzieren der Speisen auf saubere Art und Weise, wobei wesentlich davon profitiert werden kann, dass sehr viele Produkte für die Verzierungen (Saucen, Cremen, Pasten, usw.) heute in Tuben im Handel sind, aus welchen sie durch eine Öffnung am vorderen Ende der Tube herausgedrückt werden. Diesen Behälter in Form einer Tube direkt in eine Vorrichtung zum Verzieren von Speisen umzuwandeln ist die tragende Idee, auf der die vorliegende Erfindung beruht. Diese ist sodann auch im kennzeichnenden Teil des Anspruchs 2 dargelegt.

Die Ansprüche 2 bis 7 betreffen sodann Verbesserungen der Grundidee, während der Anspruch 8 die bevorzugte Anwendungsart der erfindungsgemässen Düse betrifft.

Die vorliegende Erfindung wird im Folgenden unter Bezugnahme auf einige abgebildete Ausführungsbeispiele näher beschrieben. Es zeigen die:
- Fig. 1: Eine herkömmliche Tube für Nahrungsmittel, auf welche die erfindungsgemässe Düse aufgeschraubt ist, die zusätzlich mit einem Verschlusshütchen versehen ist;
- Fig. 2: Eine erfindungsgemässe Düse, im Aufriss und in gegenüber der Fig. 1 vergrössertem Massstab dargestellt, mit einem geriffelten Griffbereich;
- Fig. 3: Die Düse gemäss der Fig. 2 im Grundriss;
- Fig. 4: Einen Schnitt längs der Symmetrieachse der erfindungsgemässen Düse gemäss der Fig. 1;
- Fig. 5: Eine Variante der erfindungsgemässen Düse in gleicher Ansicht wie die in der Fig. 2 gezeigte Düse, jedoch mit einem sechseckig ausgebildeten Griffbereich;
- Fig. 6: Die Düse gemäss der Fig. 5 im Grundriss.

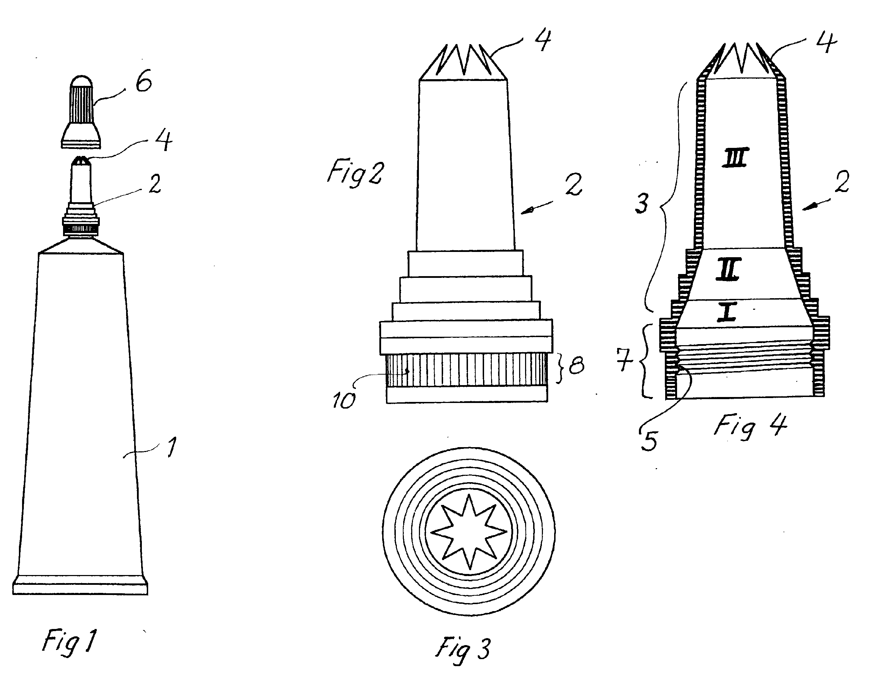

In der Fig. 1 ist mit 1 der Körper einer normalen Tube bezeichnet, die pastöses Material enthält, das sich zum Verzieren von Konditoreiprodukten eignet, von der Art wie jene, in welchen solche Materialien, wie diverse Saucen, Pasten, Cremen, usw., im Direktverkauf dem Kunden angeboten werden. Aus der Praxis ist bekannt, dass solche Tuben in verschiedenen Grössen angeboten werden, grössere für weniger teure Produkte (Mayonnaise, Tomatenpaste, Zwiebelsauce, usw.), und kleinere, die für teurere Produkte verwendet werden (Trüffelpaste, usw.). Diese Tuben haben alle die gemeinsame Eigenschaft, dass sie an ihrer Ausgangsöffnung für das Produkt ein Aussengewinde aufweisen (in der Fig. 7 nicht direkt sichtbar, da von der erfindungsgemässen Düse verdeckt, die darauf aufgeschraubt ist, wie dies im Folgenden erläutert wird), wobei auf diesem Aussengewinde normalerweise ein Tubendeckel mit Griff-Flächen, normalerweise mit sechs Seiten eines Sechsecks, aufgeschraubt ist.

Hier sei sogleich festgehalten, dass die vorliegende Erfindung vorteilhaft auf allen Arten von marktgängigen Tuben angewendet werden kann, d.h. dass die Auslegung des Gewindes der Tube kein Hindernis für die Anwendung des Erfindungsgegenstandes bildet, und dass daher für jeden im Handel erhältlichen Tubentyp ein besonderer Satz von Düsen vorgesehen werden kann, der zusammen mit der Tube oder separat verkauft werden kann, oder dass mit Gewinde versehene Anpassringe vorgesehen werden können, mittels welchen das Gewinde der Tube dem Gewinde der Düse angepasst werden kann. Diese Massnahmen sind im Rahmen der vorliegenden Erfindung von sekundärer Wichtigkeit und werden daher hier nicht näher beschrieben.

Auf der in der Fig. 1 gezeigten Tube ist nach Abschrauben des Tubendeckels, und nach Öffnen einer allenfalls auf der Öffnung angebrachten versiegelnden Abdeckung, bereits eine erfindungsgemässe Düse zur Verzierung von Konditoreiwaren aufgeschraubt, die in grösserem Massstab in den Figuren 2 bis 4 dargestellt ist. Die Düse 2 (vergleiche die Figuren 2 und 4) weist einen konischen Körper 3 auf, der den Teil der Düse 2 zur Befestigung auf der Tube 1 mit der profilierten Austrittsöffnung 4 verbindet. Die konische Partie 3 kann aus einem einzigen konischen Teil bestehen, der sich von der breitesten Stelle nach und nach bis zur engsten Stelle hin verjüngt, oder aus einer grösseren Zahl konischer Teile, beispielsweise den drei Teilen I, II, und III, wie dies im in der Fig. 4 dargestellten Schnitt gezeigt ist.

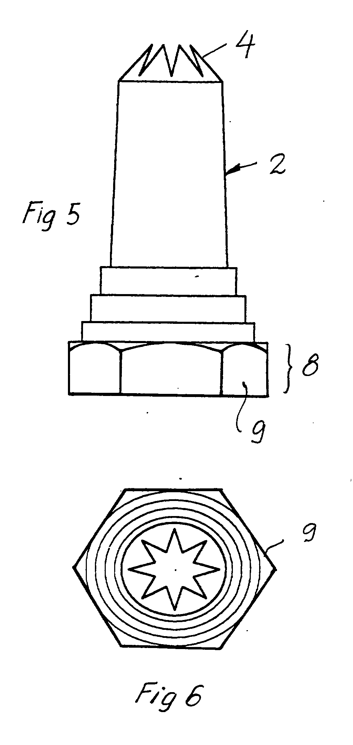

Die profilierte Öffnung 4 kann verschiedene Formen aufweisen, von welchen jene mit sternförmigem Querschnitt in den Figuren 2 bis 6 gezeigt ist (siehe insbesondere die Schnitt-Darstellungen gemäss den Figuren 3 and 6), und die lediglich ein klassisches Beispiel darstellen. Die profilierte Öffnung 4 kann alle gewünschten Formen aufweisen, mit denen die beste Dekorationswirkung erreicht werden kann.

Die breitere Seite der Düse 2 ist offen und mit einer Vorrichtung zur Befestigung auf dem Behälter versehen (hier erfindungsgemäss als normale Tube für pastöses Material vorgesehen, wie bereits erwähnt), der die pastöse Masse für die Verzierung enthält.

Die vorliegende Erfindung ist dadurch gekennzeichnet, dass die Vorrichtung zur Befestigung der Düse auf dem Behälter bzw. der Tube 1 aus einem Innengewinde 5 besteht (siehe die Fig. 4), das auf das (in der Fig. 1 nicht sichtbare) Aussengewinde (wie bereits erwähnt, direkt oder mittels einem Zwischenelement) einer normalen Tube für pastöse Massen aufgeschraubt werden kann, welche Art von Tuben im Handel für Direktverkauf an den Kunden verwendet wird. Nach dem Aufschrauben der aus der verfügbaren Auswahl gewählten Dekorationsdüse auf den Tubenkopf tritt das pastöse Material aus der Öffnung 4 mit dem gewünschten Querschnitt aus, wenn auf die Tube gedrückt wird, in solcher Weise, dass der Anwender seine Erzeugnisse direkt verzieren kann, ohne die Verzierungsmasse in einen Spritzsack oder eine spezielle Spritze umfüllen zu müssen. Nach Beendigung der Verzier-Arbeit kann der Benutzer die Düse 2 abnehmen, sie auswaschen, und die Tube mit dem normalen Tubendeckel verschliessen, oder er kann die Düse 2 auf der Tube 1 belassen und sie mit einem geeigneten Verschlusshütchen 6 verschliessen, wie dies gemäss einer bevorzugten Ausführungsform der vorliegenden Erfindung vorgesehen ist.

Gemäss einer weiteren bevorzugten Ausführungsform der vorliegenden Erfindung ist vorgesehen, dass auf dem äusseren Teil des Bereiches 7 der Düse 2, auf dessen Innenseite das Innengewinde 5 angebracht ist, ein Griffbereich 8 mit Elementen versehen ist, welche geeignet sind, das Zugreifen beim Befestigen zu verstärken.

Gemäss einer bevorzugten anderen Ausführungsform, die in den Figuren 5 und 6 dargestellt ist, sind diese Elemente mit einem Polygon von 6 bis 10 Seiten ausgebildet (in den Figuren 5 und 6 weist das Polygon 6 Seiten auf und ist bloss im Sinn eines Beispiels dargestellt), während gemäss einer weiteren günstigen Ausführungsform, die in der Figur 2 dargestellt ist, die Griff-Elemente aus einer Riffelung oder Randrierung 10 bestehen. Diese Vorkehrungen haben einzig den Zweck, das Aufschrauben der Düse 2 auf dem Gewinde der Tube 1 zu erleichtern.

Gemäss einer weiteren bevorzugten Ausführungsform der vorliegenden Erfindung ist die Düse 2 aus pressgespritztem, lebensmitteltauglichem Kunststoff hergestellt, und sie kann selbstverständlich als Einzelstück hergestellt werden, oder auch als ganzes Set mehrerer Arten von Düsen, die wahlweise verwendet werden können, wie dies gemäss dem Stand der Technik bekannt ist.

Die vorliegende Erfindung zeichnet sich durch ihre ausserordentliche Einfachheit aus, dank welcher den professionellen Konditoren sowie den Hausfrauen eine Einrichtung zur Verfügung steht, mit deren Hilfe jede Tube mit pastösen Nahrungsmitteln in eine verwendungsbereite Verzierungs-Vorrichtung umgewandelt werden kann, mit dem grossen weiteren Vorteil, der in der Natur der Tube selbst liegt, dass eine gleichsam unbeschränkte Haltbarkeit der als Verzierung verwendbaren pastösen Masse gewährleistet ist.

### Liste der in den Figuren verwendeten Bezugsziffern

- 1: Tube
- 2: Düse
- 3: konischer Körper
- 4: profilierte Öffnung
- 5: Innengewinde
- 6: Aussengewinde
- 7: Teil, in welchem das Innengewinde vorgesehen ist
- 8: Griffbereich
- 9: Polygon mit sechs Seiten
- 10: Riffelung oder Randrierung

## Patentansprüche

1. Düse (2) zum Dekorieren von Konditoreierzeugnissen mit einem konischen Körper (3), der auf seiner engeren Seite mit einer profilierten Öffnung offen ist, um mittels Auspressen einer unter darauf einwirkenden Druck austretenden pastösen Masse einen Dekorationseffekt zu erzeugen, und der auf der breiteren Seite mit einer Vorrichtung zur Befestigung am Behälter (1) versehen ist, welcher die pastöse Dekorationsmasse enthält,
**dadurch gekennzeichnet, dass**
die Befestigungsvorrichtung aus einem Innengewinde (5) besteht, das auf das Aussengewinde (1) einer normalen Tube aufgeschraubt werden kann, wie sie handelsüblich für pastöse Masse verwendet wird, um solche Massen dem Kunden im Direktverkauf zu verkaufen.

2. Düse gemäss dem Anspruch 1,
**dadurch gekennzeichnet, dass**
das Innengewinde (5) auf normale Tuben für Senf, Mayonnaise, Sauce Tatare, Tomatenpaste, Pasten, usw., aufgeschraubt werden kann, wie sie dem Kunden im Direktverkauf geliefert werden.

3. Düse gemäss dem Anspruch 1,
**dadurch gekennzeichnet, dass**
auf der Aussenseite des Bereichs (7) der Düse (2), in welchem sich das Innengewinde (5) befindet, ein Griffbereich (8) angeordnet ist, die mit Elementen versehen ist, welche die Zugriffskraft wirksamer machen.

4. Düse gemäss dem Anspruch 3,
**dadurch gekennzeichnet, dass**
die Elemente aus einem Polygon (9) mit 6 bis zehn Seiten bestehen.

5. Düse gemäss dem Anspruch 3,
**dadurch gekennzeichnet, dass**
die Elemente aus einer Riffelung oder Randrierung (10) der Oberfläche im Griffbereich (8) bestehen,

6. Düse gemäss dem Anspruch 1,
**dadurch gekennzeichnet, dass**
die Düse (2) aus lebensmitteltauglichem Kunststoff nach dem Spritzgussverfahren hergestellt ist.

7. Düse gemäss dem Anspruch 1,
**dadurch gekennzeichnet, dass**
die Düse (2) mit einem Verschlusshütchen (6) versehen ist, das mindestens den konischen Teil (3) der Düse (2) in deren Ruhelage verschliesst.

8. Anwendung der Düse zur Dekoration von Konditoreierzeugnissen gemäss den Ansprüchen 1 bis 7,
**dadurch gekennzeichnet, dass**
die Düse (2) auf das Aussengewinde einer normalen Tube (1) für pastöse Massen wie Senf Mayonnaise, Sauce Tatare, Tomatenpaste, Pasten, usw., aufgeschraubt wird, und dass beim Drücken auf die Tube (1) die pastöse Masse aus der Düse austritt, wobei sie, vorausgesetzt es werde der richtige Druck angewendet, eine bestimmte Form annimmt, die der Form der profilierten Öffnung (4) der Düse (2) entspricht, und dass die solchermassen verarbeitete Masse auf die zu verzierenden Oberfläche aufgebracht wird, wobei der gewünschte Dekorationseffekt erreicht wird.
